Europäisches Patentamt

European Patent Office

Office européen des brevets

(19)

(11) EP 1 443 786 A1

(12) EUROPEAN PATENT APPLICATION

(43) Date of publication:
04.08.2004 Bulletin 2004/32

(51) Int Cl.7: H04Q 7/38

(21) Application number: 03026983.1

(22) Date of filing: 26.11.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.01.2003 JP 2003018498

(71) Applicant: Evolium S.A.S.
75008 Paris (FR)

(72) Inventors:
• Mishima, Kazuki
Yokohama Kanagawa (JP)

• Shinozaki, Masayuki
Kawasaki Kanagawa (JP)
• Watanabe, Hideaki
Michida Tokyo (JP)

(74) Representative:
Kugler, Hermann, Dipl.-Phys. et al
Alcatel
Intellectual Property Department, Stuttgart
70430 Stuttgart (DE)

(54) Channel switching method and base station for CDMA mobile wireless system

(57) A channel switching method for a CDMA mobile wireless system is described, which enables subscribers to comfortably receive service, telecommunications carriers to increase the number of subscribers, and allows base stations to reduce the processing burden.

The effective rate measuring portion (11) in base station (1) measures the average effective data rate of the subscriber during the monitoring period (T) and the comparison portion (12) monitors the results. The chan-

nel switching control portion (13) carries out channel switching based on a report from the comparison portion (12) if the average effective data rate falls below a threshold value Sdc or rises above the threshold value Scd. Since the value of the threshold value Scd can be decreased in proportion to the frequency of switching from a common channel CCH to a dedicated channel DCH, the extent to which the subscriber can use the dedicated channel is increased.

FIG 1

## Description

[DETAILED DESCRIPTION OF THE INVENTION]

[FIELD OF THE INVENTION]

The present invention relates to a channel switching method of a CDMA mobile wireless system and a base station of the CDMA mobile wireless system, and particularly, to a channel switching method of a CDMA mobile wireless system and a base station of the CDMA mobile wireless system in which the subscriber can comfortably receive service in the CDMA mobile wireless system, while the telecommunications carrier which operates the base station can effectively use the system, and in which it becomes possible to reduce the load on the system.

[BACKGROUND OF THE INVENTION]

The CDMA mobile wireless system of the prior art, uses two types of channels. One is a dedicated channel (abbreviated to "DCH" hereinafter) for accommodating circuit exchange services which are mainly voice data and the like, and packet service. The other is a common channel (abbreviated to CCH hereinafter) which accommodates low volume packet service. The DCH and CCH can be switched by a particular algorithm, and the system is one in which the number of subscribers to which the base station can provide service is increased. Here, by covering a large number of subscribers with low volume packet service by using one channel, a system which is more efficient than the TDMA system (PDC, PHS and the like) is realized.

In the present state of mobile wireless systems, assuming the subscriber carries out packet transmission, in the case when the subscriber browses the web, downloads mail having a large amount of data, or carries out file transfer in FTP, usually DCH is selected and the user data is transferred.

When a subscriber is using the DCH for a particular fixed time period, and the effective Data Rate for the user data falls below a fixed value, the base station sends instruction to the terminal side for channel switching and the subscriber switches to the CCH.

In the case where the subscriber attempts to transfer a large amount of data once again, when the large amount of data begins to flow from the base station side to the subscriber terminal side, or from the subscriber terminal to the base station, the base station or the subscriber terminal, detects the increase in the data amount and then instructs or requests channel switching. Thus the subscriber makes a transition to the DCH state and data transfer can be carried out with ease.

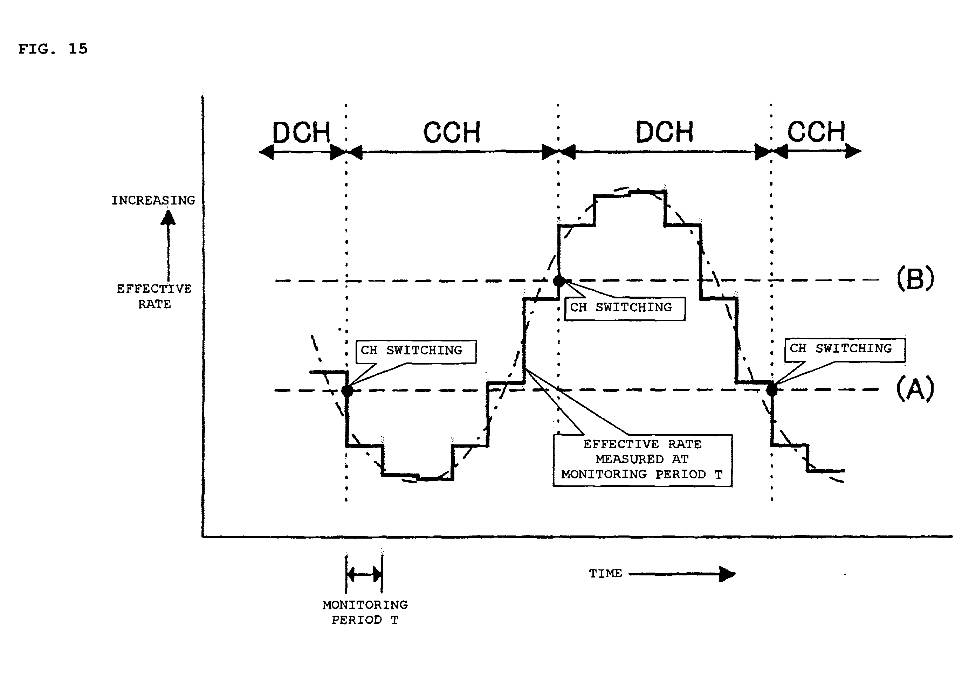

FIG. 15 illustrates the method for switching between the DCH and the CCH in the CDMA mobile wireless system of the prior art. In FIG. 15, the vertical axis shows the effective Data Rate which is measured in the monitoring period T (referred to hereinafter as "effective Rate"), and the horizontal axis shows time (elapsed time).

Here, the switching is carried out from DCH to CCH, when the effective Rate falls below a particular threshold value A. Also, the switching is carried out from CCH to DCH, when the effective Rate rises above a particular threshold value B. Usually the threshold values A and B are set to have different values so that this type of channel switching does not occur frequently.

The channel switching method of the CDMA mobile wireless system of the prior art are often ones that propose that the channel switching is carried out in accordance with the quality of the transmission or the property of the channels (frequency band and the like). However, an example of the method proposed that takes into consideration the amount of transmission, is one in which the allocation of the transmission resources to the uplink and downlink is carried out in accordance with ratio of the total amount of information of the uplink and downlink.
(Refer to PATENT DOCUMENT 1.)

Also, a method has been proposed in which the average value of the call load is measured, and in the case where this average value exceeds a predetermined threshold value, the subscriber is not permitted on the system. (Refer to PATENT DOCUMENT 2.)

[PATENT DOCUMENT 1]

Japanese Patent Application Laying Open No. 11-234242

[PATENT DOCUMENT 2]

Japanese Patent Application Laying Open No. 2011-119355

[PROBLEMS TO BE SOLVED BY THE INVENTION]

In the channel switching method of the CDMA mobile wireless system described above, there is the problem that if the system is optimized such that the time lag that the subscriber notices when a switching is carried out from CCH to DCH is made small, the monitoring period of the data rate for the data flow in the channel is shortened, and in large cities where a large amount of calls are generated, the processing for this monitoring function becomes a great burden on the base station of the system.

In addition, when the monitoring period of the data rate of data flow in the channel is lengthened in order to decrease the above-described burden on the system, this causes another problem in that the subscriber notices a large time lag when the switching is carried out from CCH to DCH, and the subscriber is dissatisfied with the service which the system provides.

Thus, if the threshold values A and B are set so as to be slightly low, the number of subscribers in the DCH state is increased, and the base station ends up using the wireless resource at all times. As a result, it becomes impossible to provide service to many subscribers.

In addition, if on the other hand, the threshold values A and B are set so as to be slightly high, the number of subscribers in the CCH is increased. From the perspective of the base station this means that many subscribers can be accommodated, but from the perspective of the subscriber, when the need arises to send and receive large amounts of data, the response for switching to DCH is poor, and they are forced to transmit data at low speeds, and in this case too the service provided by the system provides is unsatisfactory.

The present invention was formed in view of the problems of the prior art, and an object of the invention is to provide a method for channel switching of a CDMA mobile wireless system in which the subscribers may receive service with ease, meanwhile the telecommunications carrier that operates the base station can use the system effectively, and further the base station of the system can reduce its processing burden.

Also, another object of the invention is to provide a base station for a CDMA mobile wireless system in which the system subscribers can receive service with ease, meanwhile the telecommunications carrier that operate the base station can use the system effectively, and further the base station of the system can reduce its processing burden.

[MEANS FOR SOLVING THE PROBLEMS]

In order to solve the above problems the channel switching method of the CDMA mobile wireless system is characterized by that an average effective Rate of the transmission being carried out is measured periodically; the measured average effective Data Rate is compared with a threshold value; and switching between a common channel and a dedicated channel is carried out based on the comparison results, wherein the threshold value or the measurement period for the average effective Data Rate is controlled in accordance with a value related to the mode of the changes of the measured average effective Data Rate or the number of subscribers of the system (claim 1), thereby realizing a method for channel switching in a CDMA mobile wireless system in which the subscribers may receive service with ease, meanwhile the telecommunications carrier that operates the base station can use the system effectively, and further the base station of the system can reduce its processing burden.

The channel switching method of the CDMA mobile wireless system according to claim 1 is characterized by having a step wherein the threshold value is controlled based on the frequency of switching between the channels (claim 2), thereby realizing a channel switching method of the CDMA mobile wireless system which can reduce the processing burden on the entire system in which the subscriber who transmits data packets frequently, and who alternately carries out the handling of large volumes and small volumes data, that is, the subscriber whose use pattern is such that the transmission traffic is irregular, can comfortably use a system which often stays in the DCH state, while for the other subscribers, as in the prior art, transfer to the CCH is carried out as far as possible, thus increasing the number of subscribers, and the number of CCH/DCH switches for subscribers carrying out frequent data handling is kept low.

The channel switching method of the CDMA mobile wireless system according to claim 1 is characterized by having a step wherein the period of measurement is controlled based on the frequency of switching between the channels (claim 3), thereby realizing a channel switching method of the CDMA mobile wireless system in which the time for the channel to transfer to DCH is faster for the subscriber who transmits packet data frequently, and who alternately carries out the handling of large volume and small volume data, that is, the subscriber whose use pattern is such that the transmission traffic is irregular, and thus the subscriber can comfortably use the system.

The channel switching method of the CDMA mobile wireless system according to claim 1 is characterized by having a step wherein a threshold value for determining switching of the common channel, and a threshold value for determining switching of the dedicated channel which form the threshold value, is separately controlled based on the frequency of switching between the respective channels, thereby realizing a channel switching method of the CDMA mobile wireless system which can reduce the processing burden on the entire system in which the DCH state is kept even more for the subscriber who transmits packet data frequently, and who alternately carries out the handling of large volume and small volume data, that is, the subscriber whose use pattern is such that the transmission traffic is irregular, thus allowing comfortable use of the system. While for the other subscribers, as in the prior art, transfer to the CCH is carried out as far as possible, thus increasing the number of subscribers, and the frequency of CCH/DCH switches by subscribers carrying out frequent data handling is kept low.

The channel switching method of the CDMA mobile wireless system according to claim 1 is characterized by having a step wherein the threshold value is controlled based on the length of time that the common channel state is maintained (claim 5), thereby realizing a channel switching method of the CDMA mobile wireless system in which the CCH state can be kept for subscribers who very frequently carry out packet data transmission, so that from the perspective of the telecommunications carrier side, the number of subscribers can be increased.

The channel switching method of the CDMA mobile wireless system according to claim 1 is characterized by having a step wherein the threshold value is controlled based on the increase and decrease of the average effective Data Rate (claim 6), thereby realizing a channel switching method of the CDMA mobile wireless system in which, for the subscriber who transmits packet data frequently, and who alternately carries out the handling of large volume and small volume data, that is, the subscriber whose use pattern is such that the transmission traffic is irregular, the DCH state is kept more often, and the response for transfer to DCH is faster, thus allowing comfortable use of the system.

The channel switching method of the CDMA mobile wireless system according to claim 1 is characterized by having a step wherein the threshold value is controlled based on the number of subscribers, (claim 7), thereby realizing a channel switching method of the CDMA mobile wireless system in which when the number of subscribers transmitting data is few, even for subscribers transmitting a comparatively small data amount, it is possible to stay in the DCH state more often, and can use the system more comfortably.

Also, in order to solve the above-mentioned problems, the base station of the CDMA mobile wireless system according to the invention includes: an effective Rate data rate measuring portion which periodically measures the average effective Data Rate of the transmission being carried out; a comparison portion which compares the measured effective Data Rate with a threshold value; and a channel switching control portion which carries out switching between the common channel and the dedicated channel based on the comparison results, wherein the threshold value or the measurement period for the average effective Data Rate is controlled in accordance with the change amount of the measured effective Data Rate or the number of system subscribers (claim 8), thereby realizing a base station of the CDMA mobile wireless system in which the subscribers can comfortably receive service, meanwhile the telecommunications carrier which operates the base station can effectively use the system, and further, the processing burden of the system is reduced.

The base station of the CDMA mobile wireless system according to claim 8 is characterized by having a step wherein the threshold value is controlled based on the frequency of switching between the channels (claim 9), thereby realizing a base station of the CDMA mobile wireless system which can reduce the processing burden on the entire system in which, for the subscriber who transmits packet data frequently, and who alternately carries out the handling of large volume and small volume data, that is, the subscriber whose use pattern is such that the transmission traffic is irregular, the DCH state is kept more often, thus the subscriber can comfortably use the system, while for the other subscribers, as in the prior art, transfer to the CCH is carried out as much as possible, thus increasing the number of subscribers, and the frequency of CCH/DCH switches by subscribers carrying out frequent data handling is kept low.

The base station of the CDMA mobile wireless system according to claim 8 is characterized by having a step wherein the period of measurement is controlled based on the frequency of switching between the channels(claim 10), thereby realizing a base station of the CDMA mobile wireless system in which, for the subscriber who transmits packet data frequently, and who alternately carries out the handling of large volume and small volume data, that is, the subscriber whose use pattern is such that the transmission traffic is irregular, the time for the channel to transfer to the DCH is faster, thus allowing comfortable use of the system.

The base station of the CDMA mobile wireless system according to claim 8 is characterized by having a step wherein the threshold value for determining channel switching of the common channel and the threshold value for determining channel switching of the dedicated channel comprising the threshold value are separately controlled based on the frequency of switching between the respective channels (claim 11), thereby realizing a base station of the CDMA mobile wireless system in which, for the subscriber who transmits packet data frequently, and who alternately carries out the handling of large volume and small volume data, that is, the subscriber whose use pattern is such that the transmission traffic is irregular, the DCH state is kept even more often, thus allowing comfortable use of the system, while for the other subscribers, as in the prior art, transfer to the CCH is carried out as much as possible, thus increasing the number of subscribers, and the number of CCH/DCH switches by subscribers carrying out frequent data handling is kept low.

The base station of the CDMA mobile wireless system according to claim 8 is characterized by having a step wherein the threshold value is controlled based on the length of time that the common channel state can be maintained (claim 12), thereby realizing a base station of the CDMA mobile wireless system in which, the subscribers who very frequently carries out packet data transmission can be kept in the CCH state, and thus from the telecommunications carrier perspective, the number of subscribers can be increased.

The base station of the CDMA mobile wireless system according to claim 8 is characterized by having a step wherein the threshold value is controlled based on increase and decrease of the average effective Data Rate (claim 13), thereby realizing a base station of the CDMA mobile wireless system in which, for the subscriber who transmits packet data frequently, and who alternately carries out the handling of large volume and small volume data, that is, the subscriber whose use pattern is such that the transmission traffic is irregular, the DCH state is kept more often and the response for transfer to DCH is faster thus allowing comfortable use of the system.

Further, the base station of the CDMA mobile wireless system according to claim 8 is characterized by having a step wherein the threshold value is controlled based on the number of subscribers, thereby realizing a base station of the CDMA mobile wireless system in which, when the number of subscribers transmitting data is few, even for the subscriber transmitting a comparatively small data amount it is possible to stay in the DCH channel, and the subscriber can use the system comfortably.

[EMBODIMENTS OF THE INVENTION]

The embodiments of the present invention will be described in detail, in order from "First Embodiment" through to "Sixth Embodiment" with reference to the accompanying drawings.

It is to be noted that in the descriptions of each of the embodiments, the base station of the CDMA mobile wireless system of the present invention is described. However, the channel switching methods of the CDMA mobile wireless system of the present invention, is included in the description of the channel switching methods adopted in the base stations.

[FIRST EMBODIMENT]

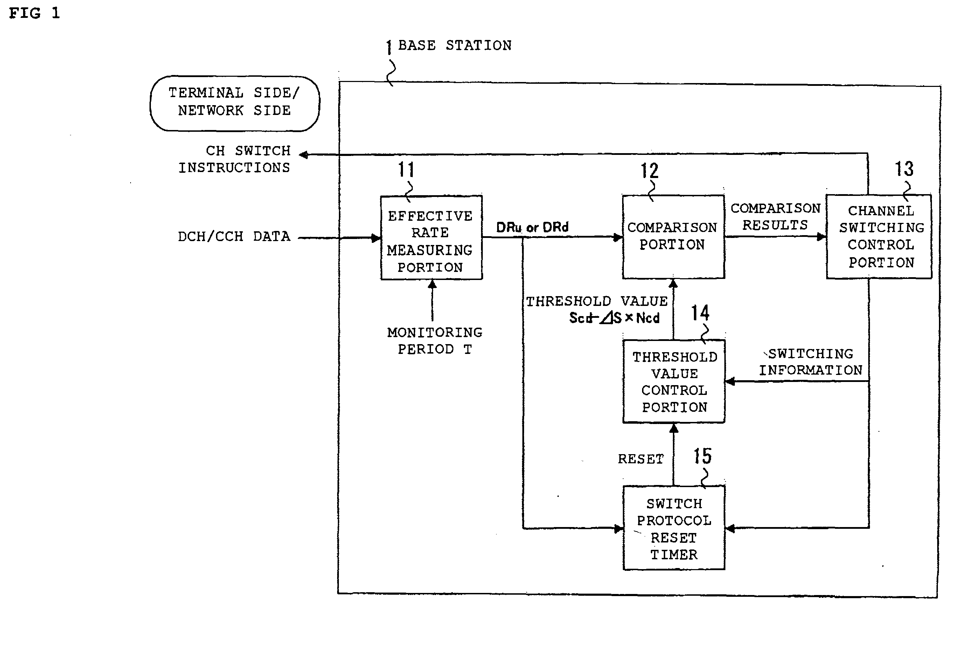

FIG. 1 is a structural diagram showing a base station of the CDMA mobile wireless system of a first embodiment according to the present invention.

In FIG. 1, the base station of the CDMA mobile wireless system of this embodiment, is within the scope if claims 1 and 2 and comprises: an effective Rate measuring portion 11 which measures the average effective Data Rate (abbreviated to "average effective Rate" or effective Rate) of the subscriber data flowing in the channel; a comparison portion 12 which compares the average effective Rate with the predetermined threshold value; a channel control portion 13 which carries out controls and processing necessary for channel switching; a threshold value control portion 14 which controls the threshold value for comparison with the average effective Rate, and sets the threshold value; and a switch protocol RESET timer 15 for preventing the channel from staying in the DCH state for long.

Instruction on the monitoring period T is sent from an external system or from an internal structural element which is not shown to the average effective Rate measuring portion 11.

The following is a description of the function of the base station 1 of the CDMA mobile wireless system of this embodiment by describing each of the structural elements.

DCH/CHC data is input in the effective Rate measuring portion 11 from the terminal side or the network side, and the effective Rate measuring portion 11 measures the average effective Rate (DRu or DRd) of the subscriber at the monitoring period. (Hereinafter subscriber does not refer to a subscriber with a service agreement, but rather it refers to a client in this group who has started to use the system.)

The comparison portion 12 carries out comparison of the measured average effective Rate and the threshold value determined at the threshold value control portion 14, and these comparison results are communicated to the channel switching control portion 13.

The channel switching control portion 13 determines whether or not channel switching is necessary based on the comparison results, and in the case where channel switching is necessary, channel switching instructions (CH switching instructions in FIG. 1) are sent to the terminal side or the network side, and the switching information is sent to the threshold value control portion 14 and the channel protocol RESET timer 15.

The threshold value control portion 14 computes a new threshold value from the switching information sent by the channel switching control portion 13, and communicates this to the comparison portion 12.

The switch protocol RESET timer 15 monitors the changes of the effective Rate (DRu or DRd), and in the case where there is no change in the rate after a fixed time has elapsed, a signal for resetting the threshold value (Reset) is sent to the threshold value control portion 14.

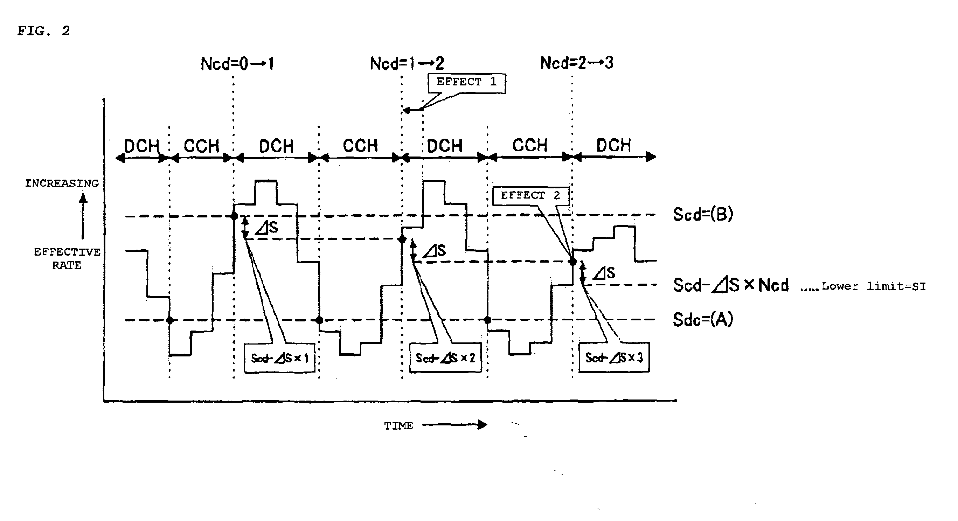

FIG. 2 is a timing chart for explaining the channel switching method of the base station of the CDMA mobile wireless system of the first embodiment of the present invention. Hereinafter, "average effective Rate" in the figures will be abbreviated to "effective Rate".

First, the subscriber sets up the call. Assume that at this point it is in the DCH state. A value A is given to the threshold value Sdc of the threshold value control portion 14, and a value B is set as the initial threshold value Scd. The effective Rate measuring portion 11 measures the subscriber average effective Rate (DRu or DRd) at period Tn, and the comparison portion 12 monitors these results.

In the case when channel switching control portion 13 detects by a report from the comparison portion 12 that the average effective Rate has fallen below the Sdc (=A), channel switching is carried out. As a result, the subscriber side is in the CCH state. Also, in the case where it is detected that the average effective Rate of the subscriber has risen above Scd (=B), the channel switching control portion 13 carries out channel switching. As a result, the subscriber side is in the DCH state. At the time when the subscriber is switched to the DCH, 1 is added to value (Ncd) at the counter Ncd (not shown).

When the CCH/DCH switch is repeated, and the subscriber is on the CCH, the comparison portion 12 monitors the average effective Rate and the formula 1 (an inequality) is verified. The channel switching control portion 13 makes determination as to whether or not a channel switching is carried out based on the report of the verification results from the comparison portion 12.

Average effective Rate $> Scd - \Delta S \times Ncd$

It is to be noted that in formula 1, $\Delta S$ is a unit variable amount of the threshold value.

In the case where the formula 1 is established, the channel switching control portion 13 switches to DCH.

In addition, when the CCH/DCH switches are carried out repeatedly, when the subscriber is on the DCH, the comparison portion 12 monitors the average effective Rate, and compares this average effective Rate with Sdc(=A). The channel switching control portion 13 switches the channel to CCH when the average effective Rate falls below Sdc(=A) based on the report of the comparison results from the comparison portion 12.

Because the base station 1 of this embodiment, has the above-described configuration, as the channel switching frequency increases, the threshold value is set lower, and therefore the time that the subscriber side can use the DCH state is increased. That is to say, this means that it becomes possible for the base station side to have a type of heuristic function.

Also, as shown in FIG. 2, the heuristic function has the effect of speeding up the transfer to the DCH state ("Effect 1" in FIG. 2). Further, even if the level of the initial threshold value is not sufficient to cause channel switching, transfer to the DCH channel can be caused.

("Effect2" in FIG. 2)

It is to be noted that the comparison portion 12 is always monitoring the subscriber average effective Rate (DRu or DRd). However, when the subscriber is in the DCH state, if the average effective Rate does not change by the time set at the switch protocol RESET timer 15 has elapsed, the Scd and the Sdc are reset, and returned to the initial threshold value of A and B. That is to say, when the subscriber whose transmission traffic is irregular suddenly stops handling data, or only transmits only small amounts of data, the switch protocol RESET timer 15 functions as a timer for preventing the channel from staying in the DCH state.

Further, the Scd cannot become lower than Sdc, and S1 shown in FIG. 2 is the lower limit.

According to this embodiment the effect is achieved that, for the subscriber who transmits packet data frequently, and who alternately carries out the handling of large volume and small volume data, that is, the subscriber whose use pattern is such that the transmission traffic is irregular, the DCH state is kept more, thus allowing comfortable use of the system.

Also, from the perspective of the telecommunications carrier, the frequency of CCH/DCH switching of subscribers who carry out frequent data handling is decreased, the processing burden on the overall system is kept low, and for the other subscribers transfer to the CCH state is carried out as much as possible as is the case in the prior art.

[SECOND EMBODIMENT]

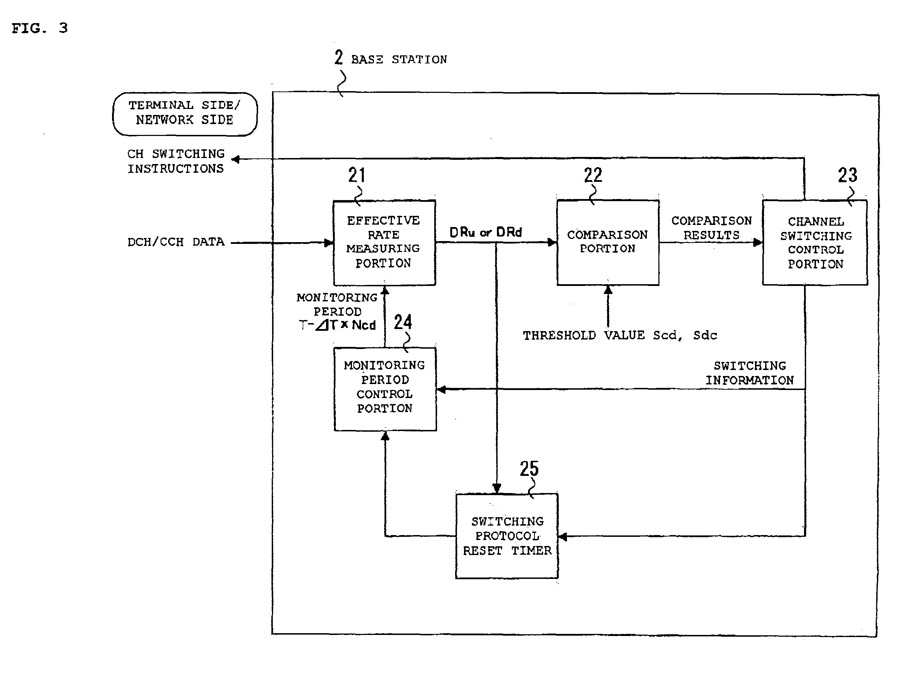

FIG. 3 shows a structural diagram of a base station of the CDMA mobile wireless system of a second embodiment of the present invention.

In FIG. 3, the base station 2 of the CDMA mobile wireless system of this embodiment are within the scope of claims 1 and 3, and comprises: an effective Rate measuring portion 21 which measures the average effective Rate of the subscriber data flowing in the channel; a comparison portion 22 which compares the average effective Rate with the set predetermined threshold value; a channel switching control portion 23 which carries out controls and processing necessary for channel switching; a monitoring period control portion 24 which controls the measuring period of the average effective Rate, and sets said measuring period; and a switch protocol RESET timer 25 for preventing the channel from staying in the DCH state for long.

The following is a description of the functions of the base station 2 of the CDMA mobile wireless system of this embodiment, by describing that of each structural element.

DCH/CCH data is input in the effective Rate measuring portion 21 from the terminal side or the network side, and the effective Rate measuring portion 21 measures the average effective Rate (DRu or DRd) of the subscriber at the monitoring period determined at the monitoring period control portion 24.

The comparison portion 22 carries out comparison of the measured effective Rate and the predetermined threshold value (Scd, Sdc) and these comparison results are communicated to the channel switching control portion 23.

The channel switching control portion 23 determines whether or not channel switching is necessary based on the comparison results, and in the case where channel switching is necessary, channel switching instructions (CH switching instructions in FIG. 3) are sent to the terminal side or the network side, and the switching information sent to the monitoring period control portion 24 and the switch protocol RESET timer 25.

The monitoring period control portion 24 computes a new monitoring period from the switching information sent by the channel switching control portion 23, and communicates this to the comparison portion 22.

The switch protocol RESET timer 25 monitors the changes of the effective Rate (DRu or DRd), and in the case where there is no change in the rate by a fixed time has elapsed, a signal for resetting the threshold value (Reset) is sent to the monitoring period control portion 24.

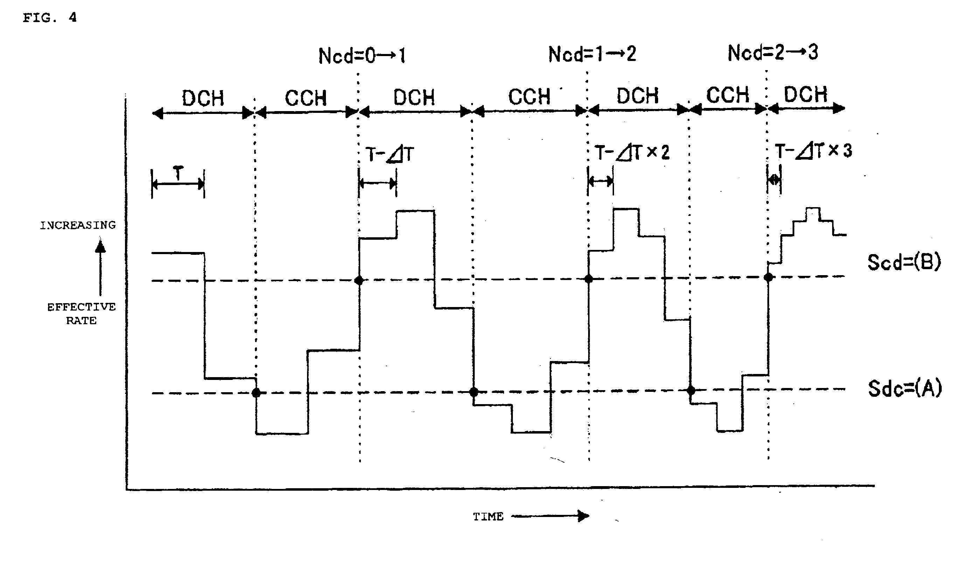

FIG. 4 is a timing chart for explaining the channel switching method of the base station of the CDMA mobile wireless system of the second embodiment of the present invention.

First, the subscriber sets up the call. Assume DCH state at this point. Tn is set as the initial value of the monitoring period of the monitoring period control portion 24. The effective Rate measuring portion 21 measures the subscriber average effective Rate (DRu or DRd) at the period determined by monitoring period control portion 24, and the comparison portion 22 monitors these results.

In the case when channel switching control portion 23 detects that the average effective Rate has fallen below the Sdc (=A) based on a report from the comparison portion 22, channel switching is carried out. As a result, the subscriber side is in the CCH state. Also, in the case where it is detected that the average effective Rate of the subscriber has risen above Scd (=B), the channel switching control portion 23 carries out channel switching. As a result, the subscriber side is in the DCH state.

At the time when the subscriber is switched to the DCH, 1 is added to value (Ncd) at the counter Ncd (not shown). When the CCH/DCH switch is repeated, the effective Rate measuring portion 21 computes the period $Tn_{+1}$ in which the average effective Rate is monitored using the formula 2. (In the formula, $\Delta T$ is a unit variable amount of the monitoring period.)

$$Period\ Tn_{+1} = Tn - \Delta T \times Ncd \qquad (2)$$

It is to be noted that in formula 2, $\Delta S$ is a unit variable amount of monitoring period.

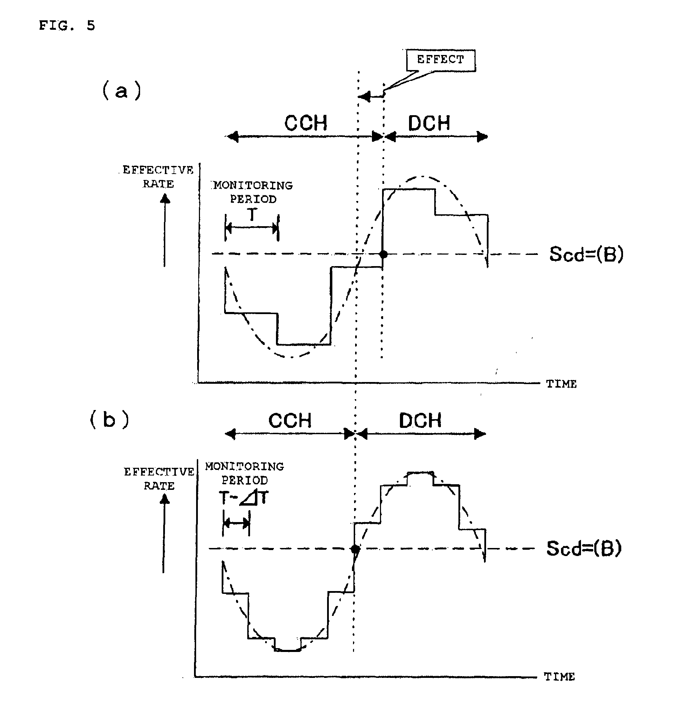

Formula 2 means that as the frequency of the channel switching increases, the period that the effective Rate measuring portion 21 monitors the average effective Rate becomes shorter, and this shows that the response to changes in the state of traffic is quicker ("Effect" in FIG. 5a). That is to say, this means that the base station 2 side now has a type of heuristic function.

FIG. 5 is a timing chart for explaining the results of the channel switching method of the base station of the CDMA mobile wireless system of the second embodiment of the present invention.

FIG. 5a shows the control operation for channel switching in the case where the monitoring period is T, and FIG. 5b shows the control operation for channel switching in the case where the monitoring period is shorter than T (T-$\Delta T$).

It can be seen that when the average effective Rate is suddenly increased, the control operation for channel switching has an effect such that the timing for transfer to the DCH state is speedier in the case of FIG. 5b where the monitoring period is shorter than T(T-$\Delta T$), than in the case in FIG. 5a where the monitoring period is T.

It is to be noted that the comparison portion 22 is always monitoring the subscriber average effective Rate (DRu or DRd). However, when the subscriber is in the DCH state, if the average effective Rate does not change by the time set at the switch protocol RESET timer 25 has elapsed, the monitoring time is reset, and returned to the initial value of Tn. That is to say, in the case when the subscriber whose transmission traffic is irregular, suddenly stops handling data, or only transmits only small amounts of data, the switch protocol RESET timer 15 functions as a timer for preventing the channel from staying in the DCH state. It is to be noted that the monitoring period cannot be less than zero and thus T1 is the lower limit.

According to the second embodiment the effect is achieved that, for the subscriber who transmits packet data frequently, and who alternately carries out the handling of large volume and small volume data, that is, the subscriber whose use pattern is such that the transmission traffic is irregular, the transfer time of the channel to DCH is faster, thus allowing comfortable use of the system.

[THIRD EMBODIMENT]

The configuration of a base station of the CDMA mobile wireless system of this embodiment is within the scope of claims 1 and 4, and is same as the configuration of the base station of the CDMA mobile wireless system of the first embodiment of the present invention (refer to FIG. 1) except that the formula for the threshold value in the threshold value control portion 14, and the algorithm for determining the channel switching in the channel switching control portion 13 are different. Thus descriptions of each of the structural elements have been omitted and the structural drawings and the references numbers of FIG. 1 will be referred to.

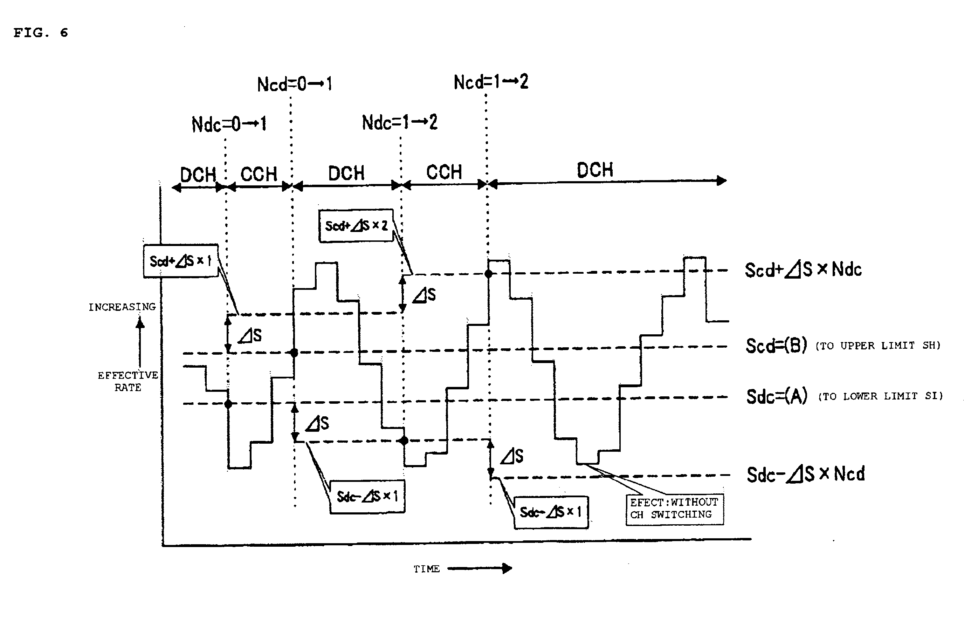

FIG. 6 is a timing chart for explaining the channel switching method of the base station of the CDMA mobile wireless system of the third embodiment of the present invention.

First, the subscriber sets up the call. Assume the DCH state at this point. At the threshold value control portion 14, a value A is set as the initial value of the threshold value Sdc and a value B is set as initial value of the threshold value Scd.

The effective Rate measuring portion 11 measures the subscriber average effective Rate (DRu or DRd) at period Tn, and the comparison portion 12 monitors these results. In the case when channel switching control portion 13 detects that the average effective Rate has fallen below the Sdc (=A), based on a report from the comparison portion 12, channel switching is carried out. As a result, the subscriber side is in the CCH state.

At the time when the subscriber is switched to the CCH, 1 is added to value (Ndc) at the counter Ncd (not shown). Also, in the case where it is detected that the average effective Rate of the subscriber has risen above Scd (=B), the channel switching control portion 13 carries out channel switching. As a result, the subscriber side is in the DCH state. At the time when the subscriber is switched to the DCH, 1 is added to value (Ncd) at the counter Ncd (not shown).

When the CCH/DCH switch is repeated, and the subscriber is on the CCH, the comparison portion 12 monitors the average effective Rate and the formula 3 is verified. The channel switching control portion 13 makes a determination as to whether or not a channel switching is carried out based on the report of the verification results from the comparison portion 12.

$$\text{Average effective Rate} > Scd + \Delta S \times Ndc \quad (3)$$

In the case where formula 3 is established, the channel switching control portion 13 switched to DCH.
When the CCH/DCH switching is repeated, and the subscriber is on the DCH, the comparison portion 12 monitors the average effective Rate and the formula 4 is verified. The channel switching control portion 13 makes determination as to whether or not a channel switching is carried out based on the report of the verification results from the comparison portion 12.

$$\text{Average effective Rate} < Sdc - \Delta S \times Ncd \quad (4)$$

In the case where formula 4 is established, the channel switching control portion 13 switches to CCH.
Because the base station 1 of this embodiment has the above-described configuration, as the channel switching frequency increases, the difference in the switching threshold value is higher, and therefore the switching frequency is decreased. That is to say, this means that it becomes possible for the base station side to have a type of heuristic function.
As shown in FIG. 6, even when the average effective Rate is at a level when conventionally transfer to CCH would occur, due to the heuristic function, channel switching does not occur. ("Effect" in FIG. 6)
It is to be noted that the comparison portion 12 is always monitoring the subscriber average effective Rate (DRu or DRd). However, when the subscriber is in the DCH state, if the average effective Rate does not change by the time set at the switch protocol RESET timer 15 has elapsed, the Scd and the Sdc are reset, and returned to the initial threshold value of A and B. That is to say, in the case when the subscriber who has irregular transmission traffic amounts suddenly stops handling data, or only transmits only small amounts of data, the switch protocol RESET timer 15 functions as a timer for preventing the channel from staying in the DCH state.
Further, the Scd cannot be lower than zero, and S1 shown in FIG. 6 is the lower limit. Also the Scd upper limit is shown in FIG. 6 as Sh.
According to the third embodiment the effect is achieved that, for the subscriber who transmits packet data frequently, and who alternately carries out the handling of large volume and small volume data, that is, the subscriber whose use pattern is such that the transmission traffic is irregular, the stay in the DCH state is even more, thus allowing comfortable use of the system.
Also, from the perspective of the telecommunications carrier, the frequency of CCH/DCH switching of subscribers who carry out frequent data handling is decreased, the processing burden on the overall system is kept low, and for the other subscribers transfer to the CCH state is carried out as much as possible as is the case in the prior art, and this has the effect of increasing the number of subscribers.

[FOURTH EMBODIMENT]

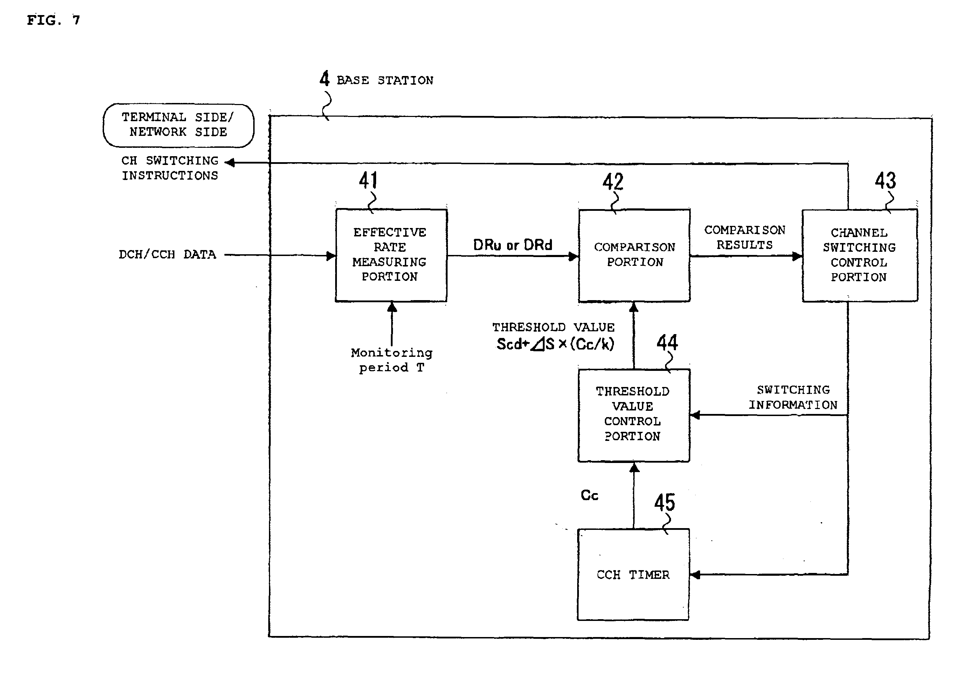

FIG. 7 shows a structural diagram of the base station of the CDMA mobile wireless system of the fourth embodiment of the present invention.
In FIG. 7, the base station 4 of the CDMA mobile wireless system of this embodiment are within the scope of claims 1 and 5, and comprises: an effective Rate measuring portion 41 which measures the average effective Data Rate of the subscriber data flowing in the channel; a comparison portion 42 which compares the average effective Rate with the set threshold value; a channel switching control portion 43 which carries out controls and processing necessary for channel switching; a threshold value control portion 44 which controls the threshold value for comparison with the average effective Rate, and sets said threshold value; and a CCH timer portion 45 which measures the time elapsed in the CCH state, and communicates this to the threshold value control portion 44.
Instructions on the monitoring period T is sent from an external system or by an internal structural element which is not shown, to the average effective Rate measuring portion 41.
The following is a description of the functions of the base station 4 of the CDMA mobile wireless system of this embodiment by describing each structural element.
DCH/CCH data is input in the effective Rate measuring portion 41 by the terminal side or the network side, and the effective Rate measuring portion 41 measures the average effective Rate (DRu or DRd) of the subscriber at the monitoring period T.
The comparison portion 42 carries out comparison of the measured effective Rate and the predetermined threshold value determined at the threshold value control portion 44, and these comparison results are communicated to the channel switching control portion 43.
The channel switching control portion 43 determines whether or not channel switching is necessary based on the comparison results, and in the case where channel switching is necessary, channel switching instructions (CH switching instructions in FIG. 7) are sent to the terminal s,ide or the network side, and the switching information sent to the threshold value control portion 44 and the CCH timer portion 45.

The threshold value control portion 44 computes a new threshold value from the CCH state elapsed time information communicated from the CCH timer portion 45 (Cc in FIG. 7) and the switching information sent by the channel switching control portion 43, and this is communicated to the comparison portion 42.

The CCH timer portion 45 measures the time that has elapsed since the CCH state, and the results of this measurement is communicated to the threshold value control portion 44 as the elapsed time information.

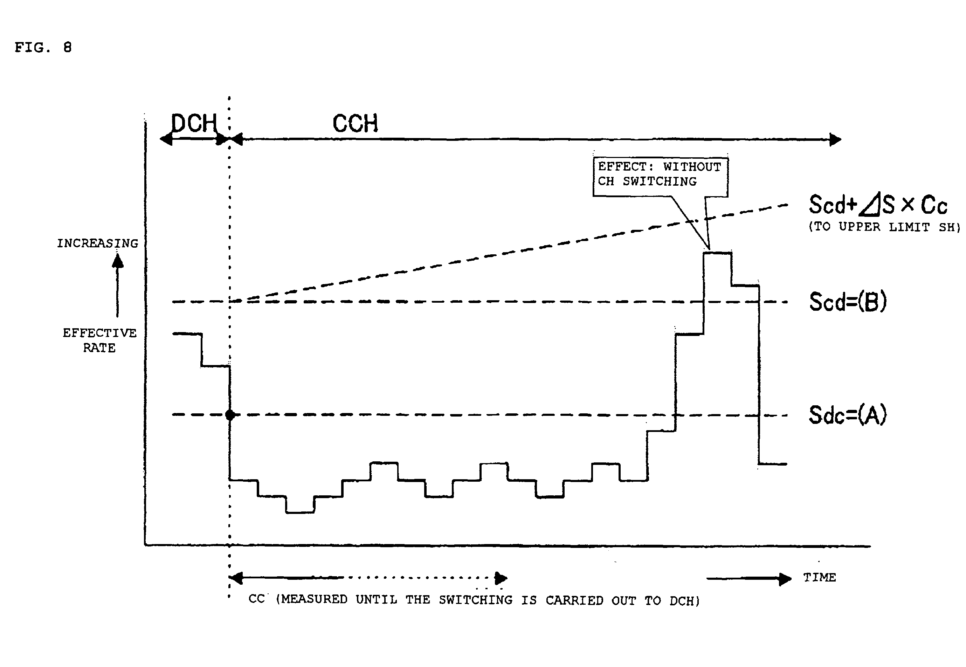

FIG. 8 is a timing chart for explaining the channel switching method of the base station 4 of the CDMA mobile wireless system of the fourth embodiment of the present invention.

First, the subscriber sets up the call. Assume that at this point it is in the DCH state. At the threshold value control portion 44, a value A (fixed) is set as the threshold value Sdc and a value B is set as the initial value of the threshold value Scd.

The effective Rate measuring portion 41 measures the subscriber effective Rate (DRu or DRd) at period Tn, and the comparison portion 42 monitors these results.

In the case when channel switching control portion 43, detects based on a report from the comparison portion 42 that the average effective Rate has fallen below the Sdc (=A), channel switching is carried out. As a result, the subscriber side is in the CCH state. Also, in the case where is detected that the average effective Rate of the subscriber has risen above Scd (=B), the channel switching control portion 43 carries out channel switching. As a result, the subscriber side is in the DCH state. At the time when the subscriber is switched to the DCH, 1 is added to value (Ncd) at the counter Ncd (not shown).

When the CCH/DCH switch is repeated, and the subscriber is on the CCH, the comparison portion 42 monitors the average effective Rate and the formula 5 (an inequality) is verified. The channel switching control portion 43 makes a determination as to whether or not a channel switching is to be carried out based on the report of the verification results from the comparison portion 22.

$$\text{Average effective Rate} < \text{Scd} + \Delta S \times (\text{Cc}/\text{k}) \text{ (k is a}$$

$$\text{fixed number)} \qquad (5)$$

It is to be noted that in formula 5, the value Cc is the elapsed time in the CCH state measured by the CCH timer portion 45.

In the case where the formula 5 is established, the channel switching control portion 43 switches to DCH.

In addition, when the CCH/DCH switching is carried out repeatedly, when the subscriber is on DCH also, the comparison portion 42 monitors the average effective Rate, and compares this average effective Rate with Sdc(=A). The channel switching control portion 43 switches the channel to CCH when the average effective Rate falls below Sdc(=A) based on the report of the comparison results from the comparison portion 42.

Because the base station 4 of this embodiment has the above-described configuration, as the CCH state is increased, the threshold value Scd for DCH switching is increased, and therefore the switching frequency can be lessened while a state where dependency on the CCH state is high is maintained. That is to say, this means that it becomes possible for the base station side to have a type of heuristic function.

Also, as shown in FIG. 8, the heuristic function has the effect that channel switching does not occur even when the average effective Rate is at a level where transfer to DCH would have occurred in the prior art ("Effect" in FIG. 8) .

It is to be noted that the Scd cannot be higher than the maximum rate in the DCH state, and thus Sh shown in FIG. 8 is the upper limit.

According to this fourth embodiment the subscriber who transmits packet data frequently can stay in the CCH state and thus from the perspective of the telecommunications carrier side, the effect is achieved that the number of subscribers can be increased.

[FIFTH EMBODIMENT]

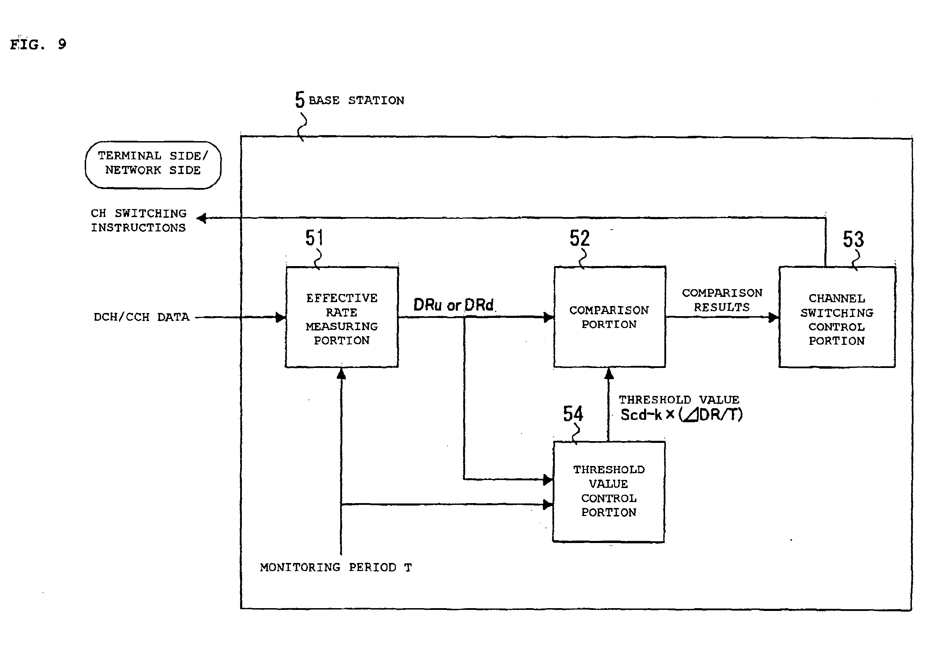

FIG. 9 shows a structural diagram of the base station of the CDMA mobile wireless system of the fifth embodiment of the present invention.

In FIG. 9, the base station 5 of the CDMA mobile wireless system of this embodiment are within the scope of claims 1 and 6, and comprises: an effective Rate measuring portion 51 which measures the average effective Data Rate of the subscriber data flowing in the channel; a comparison portion 52 which compares the average effective Rate with the set threshold value; a channel switching control portion 53 which carries out controls and processing necessary for channel switching; a threshold value control portion 54 which controls the threshold value for comparison with the average effective Rate, and sets said threshold value.

Instructions on the monitoring period T are sent from an external system or an internal structural element which is not shown, to the average effective Rate measuring portion 51 and the threshold value control portion 54.

The following is a description of the functions of the base station 5 of the CDMA mobile wireless system of this embodiment by describing each structural element.

DCH/CCH data is input in the effective Rate measuring portion 51 from the terminal side or the network side, and the effective Rate measuring portion 51 measures the average effective Rate (DRu or DRd) of the subscriber at the monitoring period T.

The comparison portion 52 carries out comparison of the measured effective Rate and the threshold value determined at the threshold value control portion 54, and these comparison results are communicated to the channel switching control portion 53.

The channel switching control portion 53 determines whether or not channel switching is necessary based on the comparison results, and in the case where channel switching is necessary, channel switching instructions (CH switching instructions in FIG. 9) are sent to the terminal side or the network side.

The threshold value control portion 54 monitors the subscriber's average effective Rate measured at the effective Rate measuring portion 51 at period T, and computes a new threshold value, and communicates this to the comparison portion 52.

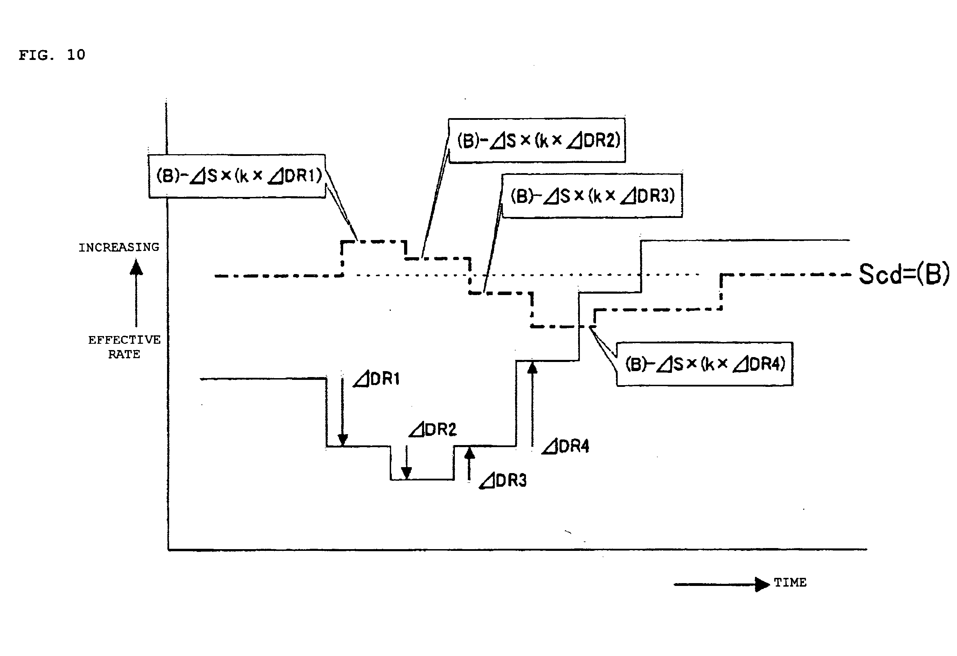

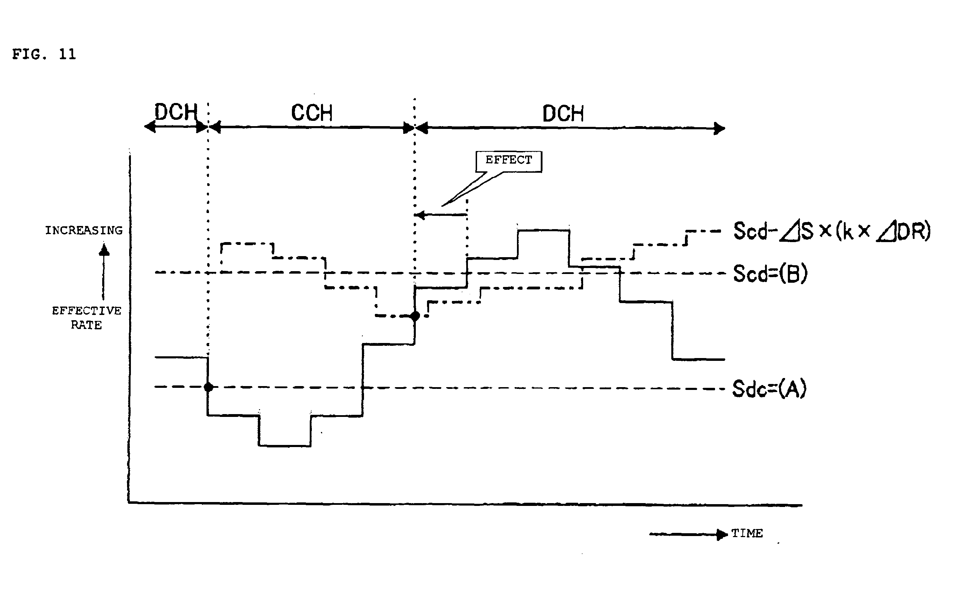

FIGs. 10 and 11 are timing charts for explaining the channel switching method of the base station of the CDMA mobile wireless system of this embodiment.

More specifically, FIG. 10 shows the changes over time of the threshold value Scd for DCH switching caused by changes over time in the average effective Rate, and FIG. 11 shows the timing of channel switching which corresponds to changes in the average effective Rate over time.

First, the subscriber sets up the call. Assume the DCH state at this point. At the threshold value control portion 54, the value A (fixed) is set for the threshold value Sdc of the, and the value B is set as the initial value of the threshold value Scd. The effective Rate measuring portion 51 measures the subscriber effective Rate (DRu or DRd) at the period Tn from the external system, and the comparison portion 52 monitors these results.

In the case when channel switching control portion 53 detects that the average effective Rate has fallen below the Sdc (=A) based on a report from the comparison portion 52, channel switching is carried out. As a result, the subscriber side is in the CCH state. Also, in the case where it is detected that the average effective Rate of the subscriber has risen above Scd (=B), the channel switching control portion 53 carries out channel switching. As a result, the subscriber side is in the DCH state.

When the CCH/DCH switching is repeated, and the subscriber is on the CCH, the comparison portion 52 monitors the average effective Rate and the formula 6 (an inequality) is verified. The channel switching control portion 53 makes determination as to whether or not a channel switching is to be carried out based on the report of the verification results from the comparison portion 52.

$$\text{Average effective Rate} > Scd - k\ (\Delta DR/Tn) \quad (6)$$

It is to be noted that in formula 6, k is a fixed amount and $\Delta DR$ is a the change amount of the average effective Rate

In the case where formula 6 is established, channel switching control portion 53 switches to DCH.

As shown in FIG. 10, when the subscriber's average effective Rate is decreased, the threshold value Scd is made higher corresponding to the decrease amount. Conversely, when the subscriber's average effective Rate is increased, the threshold value Scd is made lower corresponding to the decrease amount.

Because the base station 5 of this embodiment, has the above-described configuration, the larger the increase in the subscriber's average effective Rate, the lower the threshold Scd for DCH switching, and thus switching to DCH occurs more easily. That is to say, that the response to changes in the state of traffic is quicker, and this means that it becomes possible for the base station side to have a type of heuristic function.

As shown in FIG. 11, the above-described heuristic function has the effect that even when the subscriber's average effective Rate is at a level where transfer to the DCH would not occur in the prior art, the channel is switched ("Effect" in FIG. 11)

It is to be noted that in the case where there is no change in the subscriber's average effective Rate ($\Delta DR=0$), the DCH switching threshold value Scd returns to the initial value B, and thus a switching protocol reset timer such as that in the preceding embodiment is unnecessary.

According to this fifth embodiment the effect is achieved that, for the subscriber who transmits packet data frequently, and who alternately carries out the handling of large volume and small volume data, that is, the subscriber whose use pattern is such that the transmission traffic is irregular, the time in the DCH state is more thus making the DCH response quicker and allowing comfortable use of the system.

[SIXTH EMBODIMENT]

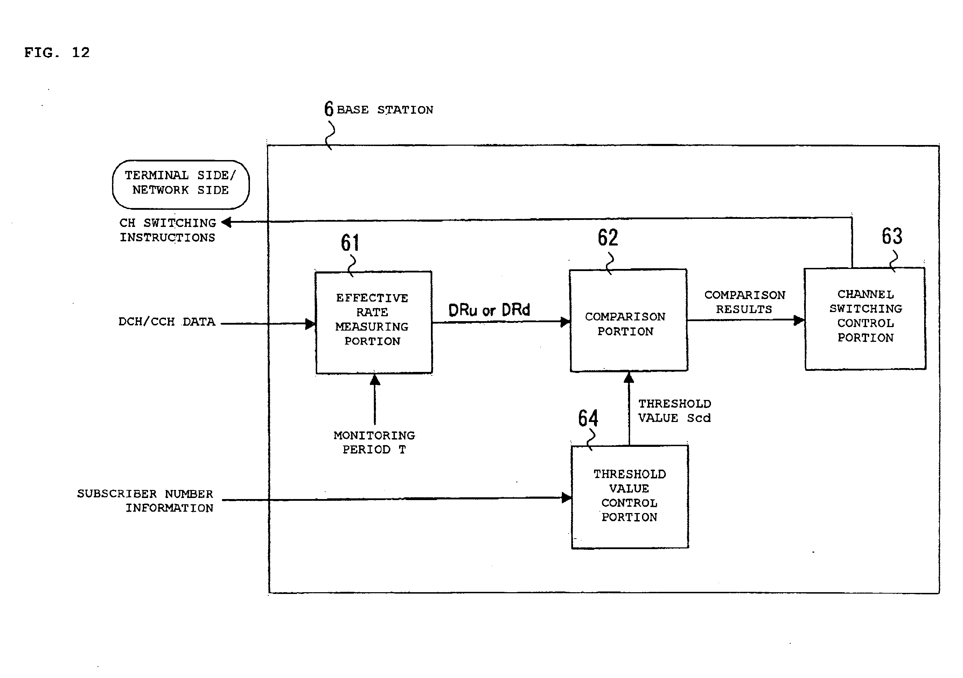

FIG. 12 shows a structural diagram of a base station of the CDMA mobile wireless system of a sixth embodiment of the present invention.

In FIG. 8, the base station 6 of the CDMA mobile wireless system of this embodiment are within the scope of claims 1 and 7, and comprises: an effective Rate measuring portion 61 which measures the average effective Data Rate of the subscriber data flowing in the channel; a comparison portion 62 which compares the average effective Rate with the set threshold value; a channel switching control portion 63 which carries out controls and processing necessary for channel switching; a threshold value control portion 64 which controls the threshold value for comparison with the average effective Rate, and sets said threshold value.

In the average effective Rate measuring portion 61 the monitoring period T is instructed from an external system or an internal structural element which is not shown, and subscriber information is input to the threshold value control portion 64 from an external system which is not shown.

The following is a description of the functions of the base station 6 of the CDMA mobile wireless system of this embodiment, made by describing each structural element.

DCH/CCH data is input in the effective Rate measuring portion 61 from the terminal side or the network side, and the effective Rate measuring portion 61 measures the average effective Rate (DRu or DRd) of the subscriber at the monitoring portion T.

The comparison portion 62 carries out comparison of the measured effective Rate and the threshold value determined at the threshold value control portion 64, and these comparison results are communicated to the channel switching control portion 63.

The channel switching control portion 63 determines whether or not channel switching is necessary based on the comparison results, and in the case where channel switching is necessary, channel switching instructions (CH switching instructions in FIG. 12) are sent to the terminal side or the network side.

The threshold value control portion 64, computes a new threshold value based on the subscriber number information input from the external system, and communicates this to the comparison portion 62.

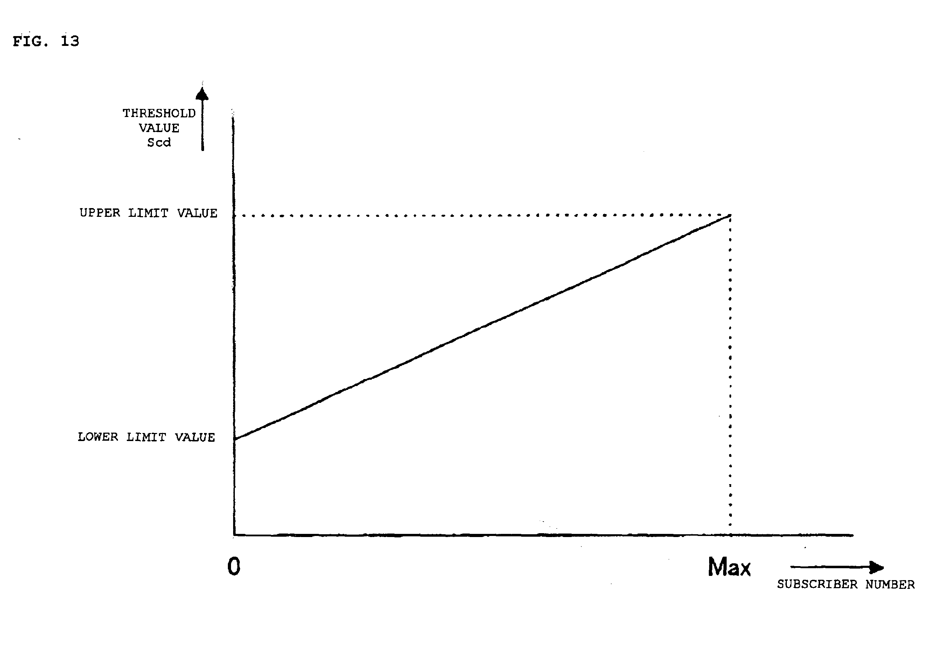

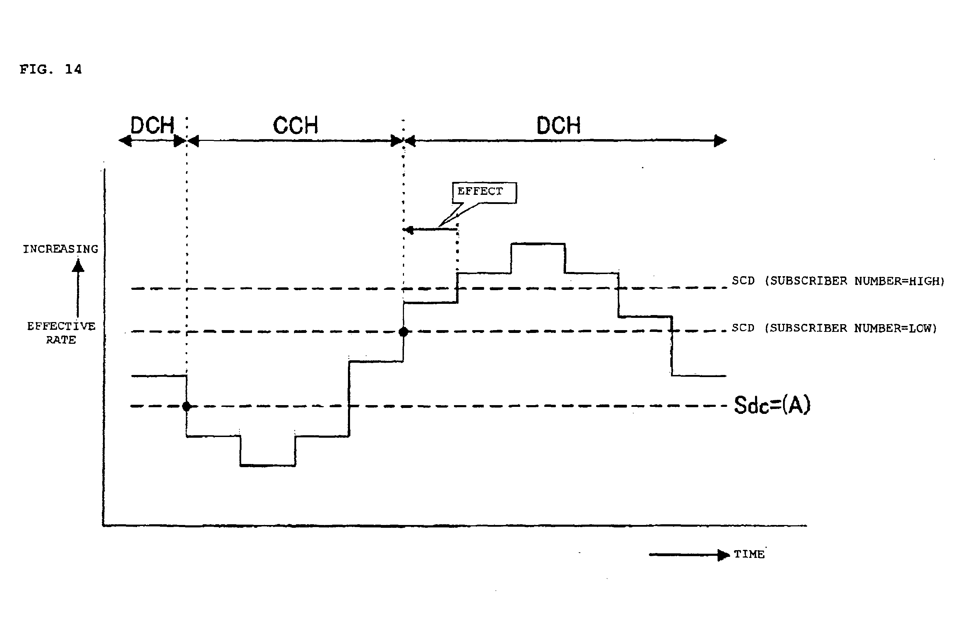

FIGs. 13 is a graph for explaining the channel switching method of the base station of the CDMA mobile wireless system of the sixth embodiment of the present invention, and FIG. 14 is a timing chart explaining the channel switching method of the base station of the CDMA mobile wireless system of the sixth embodiment of the present invention.

More specifically, FIG. 13 shows the relationship between the subscriber number of the subscriber information input from the external system, and the DCH switching threshold value Scd which is set. FIG. 14 shows the channel switching timing which corresponds to changes in the average effective Rate over time.

As shown in FIG. 13, the threshold value Scd for DCH switching starts at the lower limit value and increases to the upper limit value in proportion to the subscriber number of the subscriber information input from the external system. The number of subscribers that can be assigned this upper limit value is the maximum number of subscribers (Max) that can have a service contract with the telecommunications carrier.

First, the subscriber sets up the call. Assume that at this point it is in the DCH state. At threshold value control portion 64, the threshold value Sdc is set to value A and Sdc is determined in accordance with the subscriber number as shown in FIG. 13.

The effective Rate measuring portion 61 measures the subscriber effective Rate (DRu or DRd) at the monitoring period Tn from the external system, and the comparison portion 62 monitors these results.

The channel switching control portion 63 carries out a channel switching in the case when channel switching control portion 63 detects that the average effective Rate has fallen below the Sdc (=A) based on a report from the comparison portion 62. As a result, the subscriber side is in the CCH state. Also, in the case where is detected that the average effective Rate of the subscriber has risen above Scd which corresponds to the number of subscribers, the channel switching control portion 63 carries out channel switching. As a result, the subscriber side is in the DCH state. That is to say, the channel switching control portion 63 repeats the CCH/DCH switching.

Because the base station 6 of this embodiment is configured in this manner, as the amount of subscribers decrease, the threshold Scd for DCH switching is made smaller and thus switching to DCH occurs more easily, and conversely, as the number of subscribers increased, the threshold Scd for DCH switching is made larger and thus it is more difficult for switching to DCH to occur. That is to say, it becomes possible for the base station side to have a kind of heuristic function.

As shown in FIG. 14, the heuristic function has the effect that, even if the average effective Rate is at a level where transfer to DCH would not occur when the number of subscribers is high, when the number of subscriber is low, even if the level is the same as described above, channel switching does occur.

According to this sixth embodiment, even in the situation where the number of subscribers transmitting data is low, even for subscribers who transmit a comparatively low amount of data, the subscriber often stays in the DCH state, and this has the effect that the system can be used comfortably.

The above is a detailed description of first to sixth embodiments of the present invention. However, it is needless to say that combinations of two or more of these embodiments are included in the present invention.

[EFFECTS OF THE INVENTION]

As described above, the channel switching method of a CDMA mobile wireless system of the present invention, and the base station of the CDMA wireless system has the effect that from the perspective of the subscriber side, for the subscriber who transmits packet data frequently, and who alternately carries out the handling of large volume and small volume data, that is, the subscriber whose use pattern is such that the transmission traffic is irregular, the DCH state is kept more often thus allowing comfortable use of the system.

Further, the time it takes for the channel to transfer to DCH is faster, thus allowing the subscriber to use the system comfortably.

Further, even in the case where the number of subscribers transmitting data is low, even for the subscriber who transmits a comparatively low amount of data it is possible to stay in the DCH state more often, and this has the effect that the system can be used comfortably.

In addition, for the telecommunications carrier side, the frequency of CCH/DCH switching of subscribers which handle data frequently is reduced, and the processing burden on the entire system is reduced, and the other subscribers are transferred to the CCH as much as possible and this has the effect of increasing the number of subscribers.

Further, since the number of channel switching is kept low, there is the effect that the burden of processing necessary for the channel switching in the base station is reduced.

[BRIEF DESCRIPTION OF THE DRAWINGS]

[Fig. 1]

FIG. 1 is a structural diagram showing a base station of a CDMA mobile wireless system of a first embodiment according to the present invention.

[Fig. 2]

FIG. 2 is a timing chart for explaining a channel switching method of the base station of the CDMA mobile wireless system of the first embodiment according to the present invention.

[Fig. 3]

FIG. 3 is a structural diagram of a base station of a CDMA mobile wireless system of a second embodiment according to the present invention.

[Fig. 4]

FIG. 4 is a timing chart for explaining the channel switching method of the base station of the CDMA mobile wireless system of the second embodiment according to the present invention.

[Fig. 5]

FIG. 5 is a timing chart for explaining the effects of the channel switching method of the base station of the CDMA mobile wireless system of the second embodiment according to the present invention.

[Fig. 6]

FIG. 6 is a timing chart for explaining the channel switching method of the base station of the CDMA mobile wireless system of a third embodiment according to the present invention.

[Fig. 7]

FIG. 7 is a structural diagram of the base station of the CDMA mobile wireless system of a fourth embodiment according to the present invention.

[Fig. 8]

FIG. 8 is a timing chart for explaining the channel switching method of the base station 4 of the CDMA mobile wireless system of the fourth embodiment according to the present invention.

[Fig. 9]

FIG. 9 is a structural diagram of the base station of the CDMA mobile wireless system of a fifth embodiment according to the present invention.

[Fig. 10]

FIG. 10 is a timing chart for explaining the channel switching method of the base station of the CDMA mobile wireless system of the fifth embodiment according to the present invention.

[Fig. 11]

FIG. 11 is a timing chart for explaining the channel switching method of the base station of the CDMA mobile wireless system of the fifth embodiment according to the present invention.

[Fig. 12]

FIG. 12 is a structural diagram of the base station of the CDMA mobile wireless system of a sixth embodiment according to the present invention.

[Fig. 13]

FIG. 13 is a graph for explaining the channel switching method of the base station of the CDMA mobile wireless system of the sixth embodiment according to the present invention.

[Fig. 14]

FIG. 14 is a timing chart for explaining the channel switching method of the base station of the CDMA mobile wireless system of the sixth embodiment according to the present invention.

[Fig. 15]

FIG. 15 shows DCH and CCH switching method in the CDMA mobile wireless system according to the prior art.

[DESCRIPTION OF THE SYMBOLS]

    1, 2, 4, 5, 6 base        station
    11, 21, 41, 51, 61        effective Rate measuring portion
    12, 22, 42, 52, 62        comparison portion
    13, 23, 43, 53, 63        channel switching control portion
    14, 44, 54, 64        threshold value control portion
    15, 25        switch protocol RESET timer
    24        monitoring period control portion
    45        CCH timer
    Scd        DCH switching threshold value
    Sdc        CCH switching threshold value
    T        monitor cycle

**Claims**

1. A channel switching method of a CDMA mobile wireless system comprising the steps of: periodically measuring of the average effective Data Rate of the transmission being carried out; comparing the measured average effective Data Rate with a threshold value; and switching between a common channel and a dedicated channel based on the comparison results, wherein
    at least one of the threshold value and the measurement period for the average effective Data Rate is controlled in accordance with at least one of a value related to the mode of the changes of the measured average effective Data Rate and the number of subscribers of the system.

2. A channel switching method of a CDMA mobile wireless system according to claim 1, comprising a step of controlling the threshold value based on the frequency of switching between the channels.

3. A channel switching method of a CDMA mobile wireless system according to claim 1, comprising a step of controlling the measurement period based on the frequency of switching between the channels.

4. A channel switching method of a CDMA mobile wireless system according to claim 1, comprising a step of separately controlling the threshold value for determining switching of the common channel, and a threshold value for determining switching of the dedicated channel which form the threshold value, based on the frequency of switching between the respective channels.

5. The channel switching method of the CDMA mobile wireless system according to claim 1, comprising a step of controlling the threshold value based on the length of time that the common channel state is maintained.

6. A channel switching method of the CDMA mobile wireless system according to claim 1, comprising a step of controlling the threshold value based on increase and decrease of the average effective Data Rate.

7. A channel switching method of the CDMA mobile wireless system according to claim 1, comprising a step of controlling the threshold value based on the number of subscribers.

8. A base station of the CDMA mobile wireless system comprising: an effective Data Rate measuring portion which periodically measures the average effective Data Rate of the transmission being carried out; a comparison portion which compares the measured effective Data Rate with a threshold value; and a channel switching control portion which carries out switching between the common channel and the dedicated channel based on the comparison results, wherein
    at least one of the threshold value and the measuring period for the average effective Data Rate is controlled in accordance with at least one of a value related to the mode of the changes of the measured average effective Data Rate and the number of subscribers of the system.

9. A base station of the CDMA mobile wireless system according to claim 8, wherein the threshold value is controlled based on the frequency of switching between the channels.

10. A base station of the CDMA mobile wireless system according to claim 8, wherein the period of measurement is controlled based on the frequency of switching between the channels.

11. A base station of the CDMA mobile wireless system according to claim 8, wherein the threshold value is separately controlled for determining channel switching of the common channel and the threshold value for determining channel switching of the dedicated channel which form the threshold value based on the frequency of switching between the respective channels.

12. A base station of the CDMA mobile wireless system according to claim 8, wherein the threshold value is controlled based on the length of time that the common channel state is maintained.

13. A base station of the CDMA mobile wireless system according to claim 8, wherein the threshold value is controlled based on increase and decrease of the average effective Data Rate.

14. A base station of the CDMA mobile wireless system according to claim 8, wherein the threshold value is controlled based on the number of subscribers.

FIG 1

TERMINAL SIDE/
NETWORK SIDE

1 BASE STATION

CH SWITCH
INSTRUCTIONS

DCH/CCH DATA

11 EFFECTIVE RATE MEASURING PORTION

DRu or DRd

12 COMPARISON PORTION

COMPARISON RESULTS

13 CHANNEL SWITCHING CONTROL PORTION

MONITORING PERIOD T

THRESHOLD VALUE
$Scd - \Delta S \times Ncd$

14 THRESHOLD VALUE CONTROL PORTION

SWITCHING INFORMATION

RESET

15 SWITCH PROTOCOL RESET TIMER

EP 1 443 786 A1

FIG. 2

EP 1 443 786 A1

FIG. 3

2 BASE STATION

TERMINAL SIDE/
NETWORK SIDE

CH SWITCHING
INSTRUCTIONS

DCH/CCH DATA

21
EFFECTIVE
RATE
MEASURING
PORTION

DRu or DRd

22
COMPARISON
PORTION

COMPARISON
RESULTS

23
CHANNEL
SWITCHING
CONTROL
PORTION

MONITORING
PERIOD
$T - \Delta T \times Ncd$

24
MONITORING
PERIOD
CONTROL
PORTION

THRESHOLD VALUE Scd, Sdc

SWITCHING
INFORMATION

25
SWITCHING
PROTOCOL
RESET TIMER

EP 1 443 786 A1

17

FIG. 4

EP 1 443 786 A1

FIG. 5

(a)

EFFECT

CCH ← → DCH

EFFECTIVE RATE

MONITORING PERIOD
T

Scd=(B)

TIME

(b)

CCH ← → DCH

EFFECTIVE RATE

MONITORING PERIOD
$T - \Delta T$

Scd=(B)

TIME

FIG. 6

FIG. 7

**FIG. 7**

4 BASE STATION

TERMINAL SIDE/
NETWORK SIDE

CH SWITCHING
INSTRUCTIONS

41 EFFECTIVE RATE MEASURING PORTION

DCH/CCH DATA → EFFECTIVE RATE MEASURING PORTION

Monitoring period T

DRu or DRd

42 COMPARISON PORTION

COMPARISON RESULTS

43 CHANNEL SWITCHING CONTROL PORTION

THRESHOLD VALUE
$Scd + \Delta S \times (Cc/k)$

44 THRESHOLD VALUE CONTROL PORTION

SWITCHING INFORMATION

Cc

45 CCH TIMER

EP 1 443 786 A1

FIG. 8

EFFECT: WITHOUT CH SWITCHING

$Scd + \triangle S \times Cc$
(TO UPPER LIMIT SH)

INCREASING

EFFECTIVE RATE

$Scd = (B)$

$Sdc = (A)$

TIME

CC (MEASURED UNTIL THE SWITCHING IS CARRIED OUT TO DCH)

DCH

CCH

EP 1 443 786 A1

FIG. 9

$5$ BASE STATION

TERMINAL SIDE/
NETWORK SIDE

CH SWITCHING
INSTRUCTIONS

DCH/CCH DATA →

51
EFFECTIVE RATE MEASURING PORTION

DRu or DRd

52
COMPARISON PORTION

COMPARISON RESULTS

53
CHANNEL SWITCHING CONTROL PORTION

THRESHOLD VALUE
$Scd - k \times (\triangle DR/T)$

54
THRESHOLD VALUE CONTROL PORTION

MONITORING PERIOD T

EP 1 443 786 A1

FIG. 10

$(B)-\Delta S \times (k \times \Delta DR1)$

$(B)-\Delta S \times (k \times \Delta DR2)$

$(B)-\Delta S \times (k \times \Delta DR3)$

$(B)-\Delta S \times (k \times \Delta DR4)$

INCREASING

EFFECTIVE
RATE

$Scd=(B)$

$\Delta DR1$

$\Delta DR2$

$\Delta DR3$

$\Delta DR4$

TIME

EP 1 443 786 A1

FIG. 11

EP 1 443 786 A1

FIG. 12

EP 1 443 786 A1

6 BASE STATION

TERMINAL SIDE/
NETWORK SIDE

CH SWITCHING
INSTRUCTIONS

61

DCH/CCH DATA → EFFECTIVE
RATE
MEASURING
PORTION

DRu or DRd →

62

COMPARISON
PORTION

COMPARISON
RESULTS →

63

CHANNEL
SWITCHING
CONTROL
PORTION

MONITORING
PERIOD T

THRESHOLD
VALUE Scd

64

SUBSCRIBER NUMBER
INFORMATION →

THRESHOLD
VALUE
CONTROL
PORTION

FIG. 13

THRESHOLD
VALUE
Scd

UPPER LIMIT VALUE

LOWER LIMIT VALUE

0                                    Max

SUBSCRIBER NUMBER

EP 1 443 786 A1

FIG. 14

FIG. 15

DCH  CCH  DCH  CCH

INCREASING

EFFECTIVE
RATE

(B)

CH SWITCHING

CH SWITCHING

CH SWITCHING

(A)

EFFECTIVE RATE
MEASURED AT
MONITORING PERIOD T

TIME

MONITORING
PERIOD T

EP 1 443 786 A1

**European Patent Office**

**EUROPEAN SEARCH REPORT**

Application Number

EP 03 02 6983

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01/76304 A (ERICSSON TELEFON AB L M) 11 October 2001 (2001-10-11) * page 6, line 10 - page 8, line 4 * * page 10, line 4 - page 13, line 20 * * page 19, line 20 - page 21, line 8 * * figures 4,11 * | 1-14 | H04Q7/38 |
| X | WO 01/31948 A (ERICSSON TELEFON AB L M) 3 May 2001 (2001-05-03) | 1 | |
| A | * page 3, line 18 - page 4, line 23 * * page 5, line 14 - page 7, line 19 * * page 14, line 7 - page 15, line 10 * * page 17, line 5 - page 17, line 29 * * figures 5,10 * | 2-14 | |
| A | EP 0 522 276 A (NIPPON ELECTRIC CO) 13 January 1993 (1993-01-13) * column 22, line 15 - column 23, line 5 * | 1-14 | |
| A | WO 99/52307 A (ERICSSON TELEFON AB L M) 14 October 1999 (1999-10-14) * page 5, line 16 - page 6, line 12 * * page 7, line 6 - page 7, line 22 * * page 21, line 3 - page 22, line 9 * * page 28, line 26 - page 30, line 2 * | 1-14 | TECHNICAL FIELDS SEARCHED (Int.Cl.7) H04Q H04L |

The present search report has been drawn up for all claims

| Place of search | Date of completion of the search | Examiner |
|---|---|---|
| MUNICH | 25 May 2004 | Goedhart, A |

EPO FORM 1503 03.82 (P04C01)

## ANNEX TO THE EUROPEAN SEARCH REPORT
## ON EUROPEAN PATENT APPLICATION NO.

EP 03 02 6983

This annex lists the patent family members relating to the patent documents cited in the above-mentioned European search report.
The members are as contained in the European Patent Office EDP file on
The European Patent Office is in no way liable for these particulars which are merely given for the purpose of information.

25-05-2004

| Patent document cited in search report | | Publication date | Patent family member(s) | | Publication date |
|---|---|---|---|---|---|
| WO 0176304 | A | 11-10-2001 | AU | 3965001 A | 15-10-2001 |
| | | | WO | 0176304 A1 | 11-10-2001 |
| WO 0131948 | A | 03-05-2001 | US | 2003012217 A1 | 16-01-2003 |
| | | | AU | 1319501 A | 08-05-2001 |
| | | | BR | 0015125 A | 09-07-2002 |
| | | | CN | 1411666 T | 16-04-2003 |
| | | | EP | 1240788 A1 | 18-09-2002 |
| | | | JP | 2003513533 T | 08-04-2003 |
| | | | WO | 0131948 A1 | 03-05-2001 |
| EP 0522276 | A | 13-01-1993 | JP | 2794980 B2 | 10-09-1998 |
| | | | JP | 4351126 A | 04-12-1992 |
| | | | JP | 2697409 B2 | 14-01-1998 |
| | | | JP | 5110500 A | 30-04-1993 |
| | | | JP | 2710179 B2 | 10-02-1998 |
| | | | JP | 5211473 A | 20-08-1993 |
| | | | JP | 2710180 B2 | 10-02-1998 |
| | | | JP | 5211468 A | 20-08-1993 |
| | | | DE | 69233003 D1 | 22-05-2003 |
| | | | DE | 69233003 T2 | 22-01-2004 |
| | | | EP | 1133207 A1 | 12-09-2001 |
| | | | EP | 0522276 A2 | 13-01-1993 |
| | | | EP | 0740485 A2 | 30-10-1996 |
| | | | US | 5507008 A | 09-04-1996 |
| WO 9952307 | A | 14-10-1999 | US | 6374112 B1 | 16-04-2002 |
| | | | AU | 756958 B2 | 30-01-2003 |
| | | | AU | 3857199 A | 25-10-1999 |
| | | | CA | 2326750 A1 | 14-10-1999 |
| | | | CN | 1135012 B | 14-01-2004 |
| | | | EP | 1066729 A1 | 10-01-2001 |
| | | | JP | 2002511672 T | 16-04-2002 |
| | | | WO | 9952307 A1 | 14-10-1999 |

EPO FORM P0459

For more details about this annex : see Official Journal of the European Patent Office, No. 12/82